# EUROPEAN PATENT APPLICATION

(11) **EP 1 018 447 A2**
(43) Date of publication of application: **12.07.2000**
(21) Application number: 00300119.5
(22) Date of filing: 10.01.2000
(51) Int. Cl.: B60J 5/00, B60J 5/08

(54) **Door panels**

(30) Priority: 09.01.1999 GB 9900381
(71) Applicant: Ross & Bonnyman Limited, Forfar, Angus DD8 3DG (GB)
(72) Inventor: Sherriff, Andrew Sinclair, Glenmavis, Airdrie ML6 0NR (GB); Honig, Alan, Aboyne, Aberdeenshire AB34 5JB (GB)
(74) Representative: Allan, James Stewart

(57) **Abstract**

A structural member (1) for a roller door and a roller door incorporating such a member (1) are described. The structural member (1) can be manufactured by moulding in a single piece and identical planks (1) can be assembled together easily. Doors incorporating certain members (1) are also less prone to heat loss than conventional doors.

## Description

This invention relates to door panels making up a door which occludes an opening. The invention is particularly applicable to roller doors of the type normally used for occluding the entry to a cargo area on a vehicle such as a truck, and which can be rolled or slid out of the opening.

Conventional roller shutter doors are generally made up of a number of sections or planks hingedly joined together at their long edges so that they can pivot at those edges when the door is opened or closed. As is commonly known, adjacent planks pivot relative to one another as the plank-to-plank joint rounds the top corner of the opening and the planks are stored in the roof space above the cargo area. Conventional planks are typically formed from timber, plastics or steel.

Thermally insulated doors are required for refrigerated trucks, and can also consist of a protrusion of fibre glass formed into crude shapes which are then foam filled. The foam filling increases the integrity and rigidity of the fibre glass casing of the plank, but the overall design is extremely costly. Conventional planks are held together by conventional hinges which are screwed onto the planks in normal fashion. Also, conventional planks have mounting brackets for rollers which move in runners extending along the sides of the opening and roof space, and in which the rollers travel in order to guide the planks of the door during opening and closing. The roller brackets are likewise screwed on to the door planks.

The roller mounting brackets may include cam inserts with a bore for accepting a spindle of the roller where the bore is off-centre in the cam insert so that upon rotation of the calm insert, the spindle of the roller can be moved perpendicular to the plane of the door. This adjustment mechanism is useful especially in doors for refrigerated vehicles, since it is important in such vehicles to ensure that the door is firmly pressed against the edges of the opening so as to avoid drafts and escape of cold air from the cargo area. By adjusting the cam inserts, the axis on which the roller rotates can be moved closer to the edges of the opening thereby enhancing the seal between the door and the edges of the cargo area, and thereby preventing loss of cold air from the cargo area.

In addition to the roller brackets and hinges, it is also necessary to seal between the adjacent planks in order to prevent loss of cold air from the cargo area. Therefore, prior art doors can represent high overheads in terms of complexity and assembly of many different parts.

According to the invention there is provided a structural member for a roller door, the structural member having a casing and means within the casing to receive a guide device.

The guide device can be a roller or slider device and can include a rod, wheel or roller etc, or in certain embodiments can include a ski or other type of slider device. The guide device can be provided by any member that extends from the casing to engage a runner or channel to support the door when it is rolling up and down, and to guide the door in the correct path for folding or rolling.

The member may include one or more connectors at opposing sides for connection to adjacent members or door fittings.

The structural member is typically a plank. Preferably, the plank can be extruded from plastic such as PVC, and advantageously can be formed in one piece so that two identical planks can fit together at adjacent edges by interconnection of means for connection at the opposing edges. For example, the plank may have at one edge a female connector, and at the opposing edge it may have a male connector. The male connector connects with the female connector of an adjacent plank etc. This has the advantage that all planks can be fabricated identically, and may interconnect with one another without the need for attaching hinges etc.

Certain embodiments of the invention also have the advantage that the means for receiving the roller device can be integral with the plank, and such embodiments obviate the requirement to attach roller brackets as in the prior art. Usefully, the means for receiving the roller device can be disposed at the opposite edges of the plank, and can usefully form part of the interconnection means. Typically, a transverse bore or jaws are provided along said edges, into which a roller cam device can be inserted laterally for accepting a roller spindle. The roller cam device can typically be turned in the jaws or bore to a suitable configuration so as to adjust the pivotal axis of the roller relative to the door. Said adjustment can typically be carried out when the door is in place on a vehicle.

At least one of the edges of the plank may incorporate a seal between adjacent planks, which may preferably be extruded as part of the casing of the plank. The plank is preferably hollow and can be foam-filled in use.

The jaws are bored for receiving the cam device and can be provided with ratchet means to limit movement of the ratchet device in the bore or jaws.

The plank may incorporate steel sheeting if required.

An embodiment of the invention shall now be described, by way of an example only, with reference to the accompanying drawings, in which:-
Fig. 1a is a side sectional view of a plank;
Fig. 1b is an enlarged side sectional view of a portion of the plank of Fig. 1a;
Fig. 2 is a perspective view of a door incorporating a plank;
Fig. 3 is a perspective view of the Fig. 2 door partially exploded;
Fig. 4 is a exploded view of a cam insert and roller; and
Fig. 5 is a further perspective view of the figure 4 cam and roller.

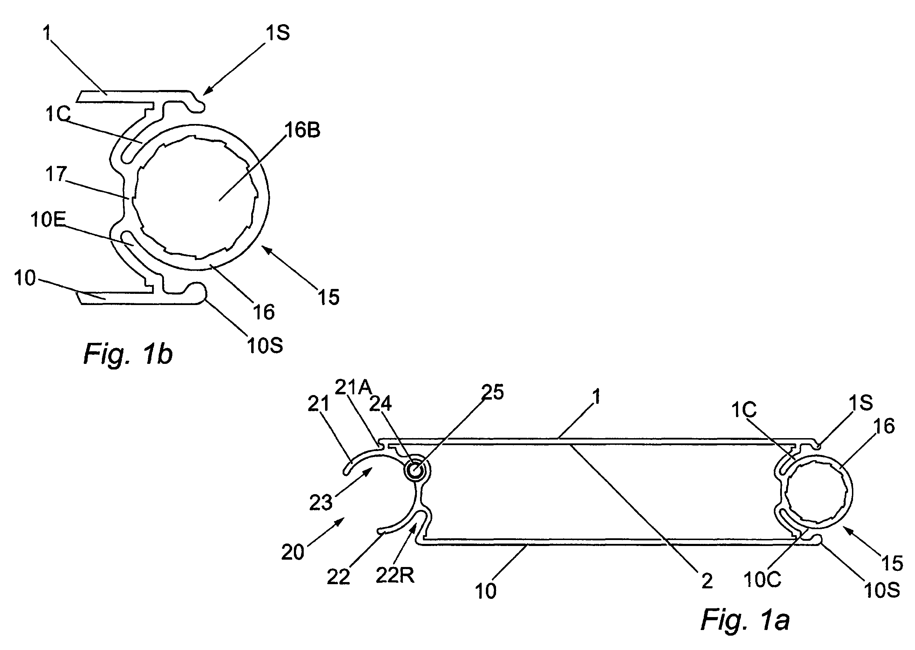

Referring now to the drawings, Figs 1a and 1b show a plank having an outer face 1, an inner face 10 and between them an upper end 15 and a lower end 20. The inner and outer faces 1, 10 are mutually parallel, and are optionally faced with an internal steel sheet 2. The space between the two faces 1, 10 can be foam filled if desired (not shown). As best shown in Fig. 1b, the upper end 15 has a tubular head 16 attached to the faces 1, 10 by a countersunk neck 17. The ends of the faces 1, 10 terminate in shoulders 1S, 10S which extend upwardly from the neck 17 past the mid-point of the head 16 forming a channel 1C, 10C on either side of the head 16 between the shoulders 1S, 10S and the head 16. The tubular head 16 extends along the upper edge of the plank from one side to the other, and has a bore 16B for accepting a roller cam described later.

The lower end 20 of the plank has a pair of jaws 21, 22 circumscribing the outer and inner edges of a partially spherical aperture 23. Jaws 21, 22 and accordingly aperture 23 extend along the lower face of the plank between the outer and inner faces 1, 10 in the same manner as the head 16 of the upper end 15 of the plank.

A second channel 24 extends along the inner face of aperture 23, likewise along the length of the lower end 20.

The jaws 21 and 22 are asymmetrical, and circumscribe the aperture 23 to different extents. The outer jaw 21 circumscribes approximately 150° of the outer face of the channel 23, while the inner jaw 22 circumscribes approximately 90° of the inner face of the channel 23. The jaws 21, 22 are partially spherical internally and externally of the channel 23.

The jaws 21, 22 are adapted to engage the head 16 of an adjacent plank, which is adapted to fit within the aperture 23. When the head 16 is located in the aperture 23, the end of the outer jaw 21 is disposed at the end of the channel 1C and abuts the neck 17. The jaw 21 is gripped between the outer face of the channel 1C and the outer face of the head 16, and the shoulder 1S engages an indent 21A.

When adjacent joined planks are parallel, the inner jaw 22 does not extend substantially into the channel 10C, but is disposed between the shoulder 10S and the outer face of the head 16. The connection between the head 16 and jaws 21, 22 of adjacent joined planks is pivotal, and the lower plank can pivot inwardly relative to the upper plank in which case the shoulder 10S will move around the outer face of lower jaw 22 into recess 22R, and the tip of jaw 22 will move along the channel 10C until it abuts the neck 17 at which point, pivotal movement between the two planks is no longer possible. While this is occurring, the tip of jaw 21 moves back in channel 1C away from the neck 17, but the over centre arrangement of the jaws 21, 22 ensure that the head 16 is always gripped firmly between the jaws 21, 22 in the aperture 23. The jaws 21, 22 and channels 1C, 10C thereby control the folding of the door.

A seal 25 can be disposed in aperture 24 so as to seal the connection between the adjacent planks when joined together.

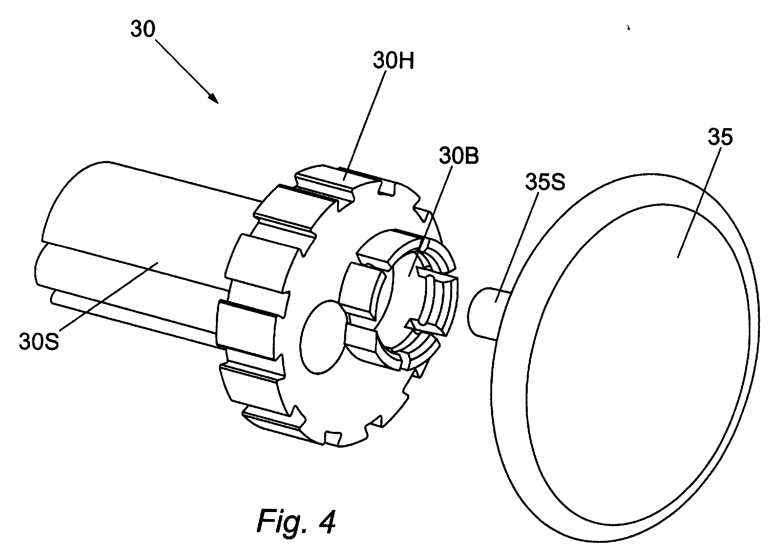

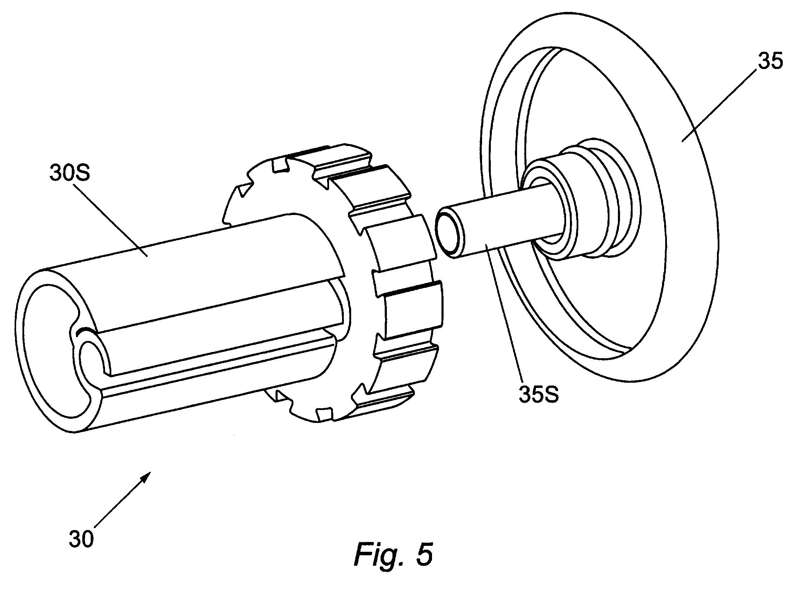

Bore 16B is adapted to receive the stem of a cam bearing 30 (Figs. 4 and 5). Cam bearing 30 includes a stem 30S which is a snug fit in the bore 16B, and the head 30H is slightly larger, and in the assembled device remains outside the bore 16B. The stem 30S and the inner face of bore 16B have co-operating ratchet formations which limit the rotational movement of the stem 30S in the bore 16B. The cam bearing 30 has a longitudinal bore 30B which extends parallel to the axis of the cam bearing 30, but offset to one side from the axis, so that it is off centre. The bore 30B can receive a spindle 35S of a roller 35, and provides bearing support for the roller spindle 35S allowing it to rotate in the bore 30B. When the roller spindle 35S is engaged in the bore 30B, and the stem 30S of the cam bearing 30 is engaged in the bore 16B of the head 16, the cam bearing 30 can be rotated in the bore 16B, subject to the limitations of the ratchet formations, to move the rotational axis of the roller 35 towards the outer or inner faces 1, 10 and can thereby adjust the pressure of the closed door against the edge seals of the cargo area.

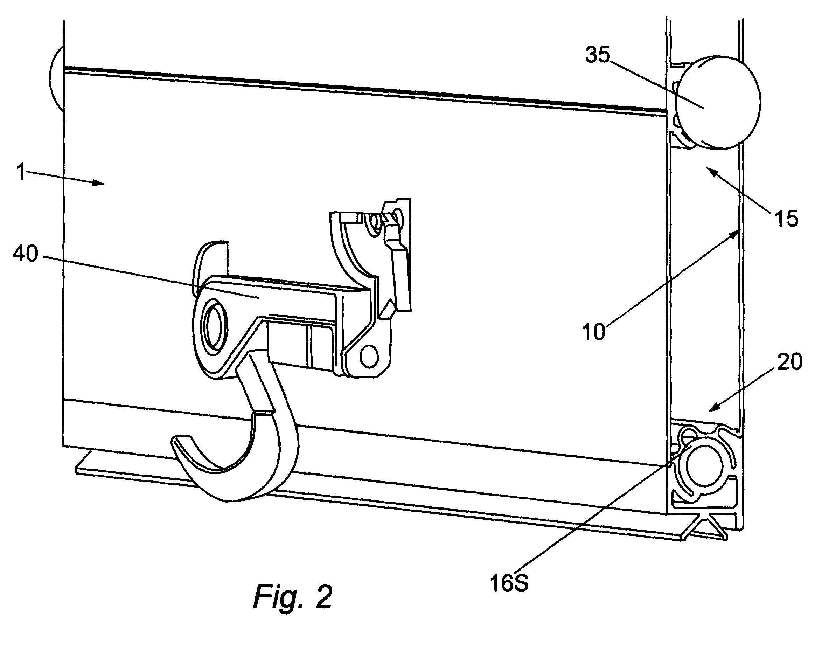

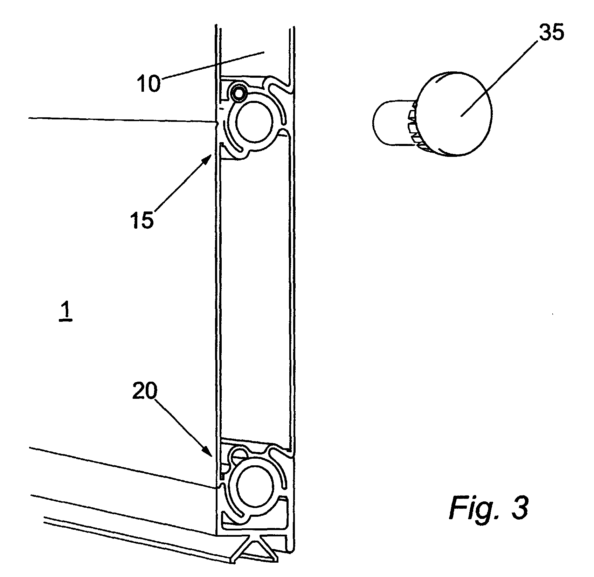

Referring particularly to Figs 2 and 3, the last plank in the door can have a lock 40 (Fig. 2) which is preferably attached to the outer steel skin 2 (Fig. 1) without any fixings passing through the plank, and at its lower end 20 preferably has a seal with a head 16S adapted to co-operate with the lower end 20 of the plank in the manner described above, and to seal the lower end 20 against the floor of the cargo area when the door is shut.

Embodiments of the present invention provide an advantage in assembly of a door, since it is unnecessary to assemble different parts of the plank in order to fabricate the door. In addition, certain embodiments of the invention obviate the requirement for fixings to be screwed into the face of the door which may transfer heat from the outer face 1 to the inner face 10 and thereby impair the efficiency of a door designed for refrigerated vehicles.

Modifications and improvements can be incorporated without departing from the scope of the invention.

## Claims

1. A structural member for a roller door, the member having a casing, and means within the casing to receive a guide device.

2. A structural member according to claim 1, wherein the casing and the means to receive the guide device are of unitary construction.

3. A structural member according to claim 1 or claim 2, wherein the member has at least one connector member for connection to co-operating connector members on adjacent members or door fittings.

4. A structural member according to claim 3, wherein the or each connector member comprises a female connector on one structural member, and a male connector on an adjacent structural member.

5. A structural member according to claim 3 or claim 4, having a respective connector member at two opposing faces.

6. A structural member according to any one of claims 3 to 5, wherein the means for receiving the guide device is incorporated within a connector member.

7. A structural member according to claim 6, wherein the means for receiving the guide device comprises a socket provided along one or more edges of the structural member, into which a roller cam device can be inserted for accepting a roller spindle.

8. A structural member according to claim 7, wherein the roller cam device can be turned in the socket to adjust the pivotal axis of the roller cam device.

9. A structural member according to claim 7 or claim 8, wherein the socket is provided with ratchet means to limit movement of the roller cam device in the socket.

10. A structural member according to any preceding claim, incorporating a seal for sealing between adjacent members when connected.

11. A structural member according to claim 10, wherein the seal is extruded or moulded with the casing.

12. A structural member according to claim 11, filled or part-filled with an insulating material.

13. A structural member according to any preceding claim, extruded from plastics material.

14. A structural member according to any preceding claim, incorporating metal sheeting.

15. A structural member as claimed in any preceding claim, wherein the guide device is a wheel, roller or slider.

16. A roller door comprising two or more structural members according to any one of the preceding claims, connected together.
